# EUROPÄISCHE PATENTSCHRIFT

(11) **EP 0 784 393 B1**
(45) Veröffentlichungstag und Bekanntmachung des Hinweises auf die Patenterteilung: **27.12.2006**
(21) Anmeldenummer: 97890003.3
(22) Anmeldetag: 09.01.1997
(51) Int. Cl.: H04L 12/417

(54) **Verfahren und Anlage zur Übertragung von Daten**
Method and apparatus for transmitting data
Procédé et dispositif pour la transmission de données

(30) Priorität: 10.01.1996 AT 4296
(43) Veröffentlichungstag der Anmeldung: 16.07.1997
(73) Patentinhaber: FREQUENTIS NACHRICHTENTECHNIK GESELLSCHAFT m.b.H., 1120 Wien (AT)
(72) Erfinder: Wilson, Jeffrey D., New Jersey 07675 (US); Bardach, Johannes, Dipl.-Ing., 1130 Wien (AT)
(74) Vertreter: Wildhack, Helmut

(56) Entgegenhaltungen:
- DE-A- 3 142 683
- DE-A- 3 424 866

## Beschreibung

Die Erfindung betrifft ein Verfahren gemäß dem Oberbegriff des Patentanspruches 1.

Des weiteren betrifft die Erfindung eine Anlage gemäß dem Oberbegriff des Patentanspruches 18.

Ein vergleichbares Verfahren und eine vergleichbare Anordnung sind z.B. aus der US-PS 5,434,861 bekannt.

Aus der DE 34 24 866 A ist ein Verfahren zur Übertragung von Daten zwischen an einem Bus angeschlossenen Stationen bekannt, wobei der Stationstakt mit einem von einer Master-Station abgegebenen Synchronisationssignal synchronisiert wird. Vor Beginn der Datenübertragung wird mit vorgegebener Wiederholungsfrequenz von der Master-Station ein den Beginn eines Rahmens definierendes Startpaket auf den Bus abgegeben. Die einzelnen Stationen werden in eine Reihenfolge gesetzt und es werden aufeinanderfolgende Zeitfenster den Stationen zugeordnet, in welchen Zeitfenstern die Stationen Daten in den Bus einspeisen. Das den Beginn des Rahmens festlegende Startpaket wird von alle Stationen als Synchronisationssignal für den jeweiligen Takt herangezogen. Dabei ist eine Initialisierungsphase vorgesehen, in der die Zentraleinheit alle teilnehmenden Stationen ermittelt und jeder ermittelten Station einen festen Zeitschlitz für eine Anforderungsphase zuteilt, eine Anforderungsphase vorgesehen, in der die einzelnen Stationen einen benötigten Buszugriff anmelden, wobei jede Station ihren festen Zeitschlitz hat und eine Zuweisungsphase vorgesehen, in der die Zentraleinheit jeder Station einen Zeitschlitz aufgrund der eingegangenen Anforderungen zuweist und eine Datenphase vorgesehen, in der die Daten übertragen werden.

Ziel der Erfindung ist es, ein Verfahren und eine Anordnung der eingangs genannten Art bei einfachem Aufbau und hoher Übertragungsrate betriebssicher zu gestalten. Die Synchronisation der einzelnen Stationen soll oftmals rasch und genau erfolgen, wobei eine Abänderung der Anlage durch einfaches Anschließen oder Anhängen von einzelnen Stationen einfach zu bewerkstelligen sein soll. Insbesondere soll jedoch bei Einsatz des erfindungsgemäßen Verfahrens bzw. der erfindungsgemäßen Anlage bei Flugsicherungsanlagen Sorge dafür getragen werden, dass die Sprachdaten und die zugehörigen Signalisierungsdaten möglichst rasch, d.h. innerhalb einer vorgegebenen Mindestzeit, von einer Station zur anderen Station übertragen werden.

Dieses Ziel wird bei einem Verfahren der eingangs genannten Art erfindungsgemäß durch die im Kennzeichen des Anspruches 1 genannten Merkmale erreicht.

Eine Anlage der eingangs genannten Art ist erfindungsgemäß durch die im Kennzeichen des Anspruches 18 angeführten Merkmale charakterisiert. Erfindungsgemäß wird eine Anzahl von untereinander gleichberechtigten, dezentral aufgebauten Stationen längs eines Busses angeordnet, die unter sich bei Betriebsbeginn eine Master-Station auswählen. Diese Auswahl geht durch entsprechende Kommunikation der einzelnen Stationen nach vorgegebenen Kriterien vor sich. Damit wird ein einfacher Aufbau der gesamten Anlage erreicht, da die einzelnen Stationen hinsichtlich ihrer zur Kommunikation benötigten Bauteile einander gleichen können. In vorteilhafter Weise erfolgt eine phasenstarre Synchronisation der einzelnen Stationen durch von der Master-Station zu Beginn eines Übertragungsrahmens ausgesandte Startpakete, die für alle Stationen gültige Synchronisationssignale darstellen. Bei jedem Aussenden bzw. zu Beginn eines jeden Übertragungsrahmens erfolgt eine neue phasenstarre Synchronisation der einzelnen Stationen. Zentrale Clockeinheiten, die allen Stationen gemeinsam sind und Schwierigkeiten bei der Übermittlung und Einstellung des Stationstaktes bereiten, sind nicht erforderlich. Den auf einen synchronen Zeitablauf festgelegten Stationen wird im Übertragungsrahmen ein Zeitbereich bzw. Zeitfenster bestimmter Länge zugeordnet, in dem die jeweilige Station Daten in den Bus einspeisen bzw. senden kann. Demzufolge ist jede Station immer genau bekannt bzw. vorgegeben, zu welchem Zeitpunkt und für welche Zeitspanne sie Daten auf den Bus absenden kann, ohne dass es dazu notwendig ist, von einer zentralen Station eine Freigabe zu erhalten. Diese Vorgangsweise erfolgt anders als bei einem Token-Ring, bei dem die Zuordnung der Zeitbereiche nach Bedarf erfolgt; erfindungsgemäß erfolgt eine fixe Zuordnung, die allerdings für bestimmte Zeitspannen abgeändert werden kann, jedoch immer deterministisch bleibt. Die erfindungsgemäße Vorgangsweise entspricht somit auch nicht der Vorgangsweise bei CSMA-CD oder TDM-Übertragungen, wie z. B. PCM-30.

Wenn gemäß dem Kennzeichen des Patentanspruches 2 vorgegangen wird, ergibt sich eine sehr einfache, aber trotzdem sehr genau erfolgende Einstellung und gute Übereinstimmung der Stationstakte der einzelnen Stationen. Damit wird es möglich, dass die einzelnen Stationen zu den genau definierten Zeitpunkten des ihnen zugeordneten Zeitbereiches zu senden beginnen und ihre Sendung auch zu dem genau festgelegten Ende des Zeitbereiches bzw. der ihnen zum Senden zur Verfügung stehenden Zeitspanne beenden. Sofeme eine Station ein verspätetes Eintreffen des Synchronisationssignales erkennt, verlangsamt sie den Stationstakt; bei einem verfrühten Eintreffen wird der Stationstakt beschleunigt.

Patentanspruch 3 gibt eine Reihe von Möglichkeiten für die Festlegung einer Reihenfolge für die einzelnen Stationen längs des Busses an. Eine weitere Möglichkeit zur Auswahl der Master-Station ist in Anspruch 4 angeführt.

Zur Vereinfachung der Übertragungsprotokolle und Vereinheitlichung des Aufbaues kann gemäß den Merkmalen des Patentanspruches 5 vorgegangen werden. Wesentlich ist es jedoch, daß nur relativ kurze Datenpakete übertragen werden, die kurze Präambeln und kurze Header besitzen, damit das Verhältnis von übertragenen Sprach- und/oder Signalbytes zu den nötigen Präambel- und Headerbytes optimiert wird. Die Übertragungskapazität und Übertragungsschnelligkeit wird vergrößert, wenn gemäß den Merkmalen des Patentanspruches 7 vorgegangen wird.

Auch wenn ein deterministisches Übertragungsnetz ausgebildet wird, kann gemäß Patentanspruch 6 vorgegangen werden; die Zuordnung bzw. Abänderung des den jeweiligen Stationen zugeordneten Zeitbereiches liegt jedoch nicht im Ermessen der einzelnen Stationen sondern erfolgt unter Berücksichtigung der Übertragungskapazität bzw. dem Übertragungsbedarf der gesamten Anlage.

Vorteilhafterweise wird dabei gemäß den Merkmalen der Patentansprüche 8 und 9 vorgegangen.

Hohe Redundanz bzw. Sicherheit der Übertragung wird durch die Merkmale des Patentanspruches 10 erreicht. Eine Neuauswahl der Master-Station im Fehlerfall kann erfolgen, indem in den einzelnen Stationen eine bestimmte Zeitspanne zugewartet wird, ob nicht doch noch ein Startpaket eines Übertragungsrahmens eintritt. Diese Zeitspanne entspricht in den einzelnen Stationen vorteilhafterweise einem Vielfachen der Zeitdauer eines Übertragungsrahmens zuzüglich einer Zeitspanne, die für die Übermittlung des Übertragungsrahmens von der bisherigen Master-Station zu den einzelnen Stationen benötigt wurde. Jede Station, die ein Ausbleiben eines Übertragungsrahmens, feststellt, schickt ein Startpaket auf den Bus, gefolgt von einer Anzahl nicht definierter Signale, um eine gewisse Signaldauer zu erreichen. Sofeme keine andere Station ein gleichartiges Signal auf den Bus sendet, so wird dieses neue Startpaket von allen Stationen anerkannt bzw. diese Stationen synchronisieren sich auf dieses Startpaket und die Station, die dieses Startpaket abgesendet hat, wird als neue Master-Station akzeptiert. Wenn hingegen zwei oder mehrere Stationen ein neues Startpaket absenden, weil in allen diesen Stationen die Wartezeit überschritten wurde, so erkennen diese Stationen, daß auch zumindest eine andere Station ein Startpaket abgesendet hat und warten daraufhin vor einem neuerlichen Absenden eines Startpaktes ein Vielfaches der bisherigen Wartezeit und senden sodann neuerlich ein Startsignal usw. Es ist anzunehmen, dass aufgrund der sich jeweils verlängernden Wartezeiten in den Stationen, die jeweils zu unterschiedlichen Zeitpunkten ein Startpaket gesendet haben, sich der Zeitunterschied zwischen dem Absenden von zwei Startpaketen verschiedener Stationen vervielfacht und eine Station mit der Aussendung eines Startpaketes bereits zu Ende ist, bevor die andere(n) Station(en) damit anfangen. Auf diese Weise hat die Station an alle Stationen ein Startpaket ungestört übermittelt und wird als neue Master-Station erkannt.

Optimierte Verhältnisse zur Übertragung von Daten werden bei Auslegung nach den Merkmalen des Anspruches 12 erreicht. Hier besteht eine Optimierung der einzelnen Parameter bei bestmöglicher Anpassung an die vorhandenen technischen Gegebenheiten, schneller Übertragungsdauer und großer Übertragungskapazität.

Um die Nachrichtenübertragung, d. h. die Übertragung von anlagenintemen Daten und Signalen zu erreichen, wird gemäß Anspruch 13 vorgegangen. Dieses Zeitfenster wird bei Bedarf einzelnen Stationen zur Verfügung gestellt; dazu stimmen sich die einzelnen Stationen untereinander und/oder mit der Master-Station ab.

Zur weiteren Optimierung der Datenübertragung kann gemäß Patentanspruch 14 vorgegangen werden. Durch die Reduzierung der Präambeln der einzelnen Datenpakete bzw. deren Weglassen wird das Verhältnis der für die Präambeln und die Header benötigten bytes zu den zur Übertragung von Daten zur Verfügung stehenden bytes noch weiter verbessert.

Um die kurze Präambeln aufweisenden Datenpakete in den einzelnen Stationen entsprechend erkennen zu können, sind, wird entsprechend Patentanspruch 15 vorgegangen.

Eine erfindungsgemäße Anlage wird vorteilhafterweise durch die im Anspruch 19 und/oder 20 angeführten Merkmale vorteilhaft weitergebildet.

Im folgenden wird die Erfindung anhand der Zeichnung beispielsweise näher erläutert. Es zeigen Fig. 1 schematisch den allgemeinen Aufbau einer erfindungsgemäßen Anlage. Fig. 2 zeigt ein schematisches Schaltschema einer Station einer erfindungsgemäßen Anlage. Fig. 3 zeigt bekannte und erfindungsgemäß erstellte Datenpakete bzw. Übertragungsprotokolle.

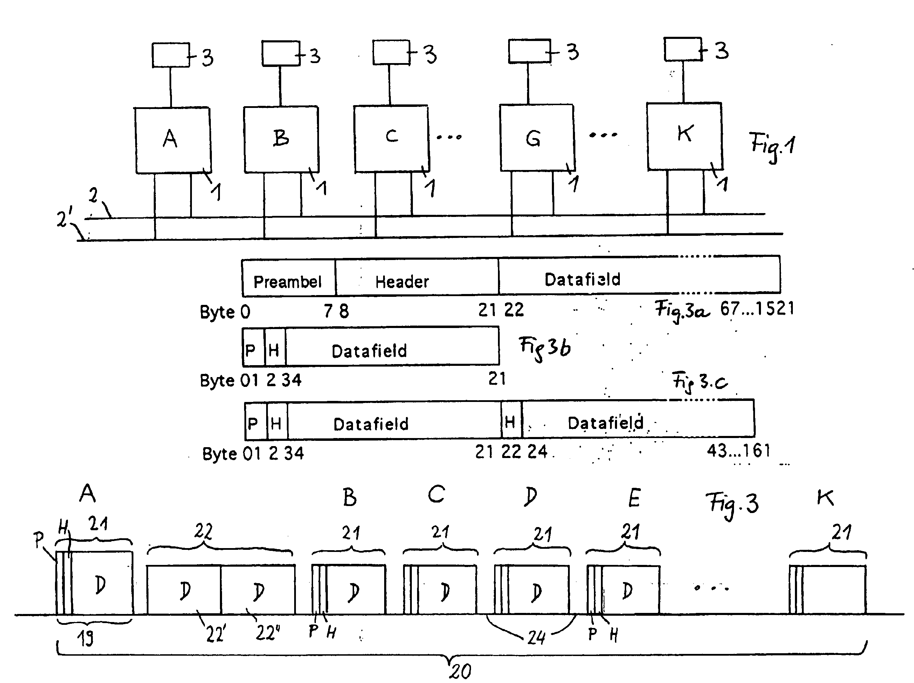

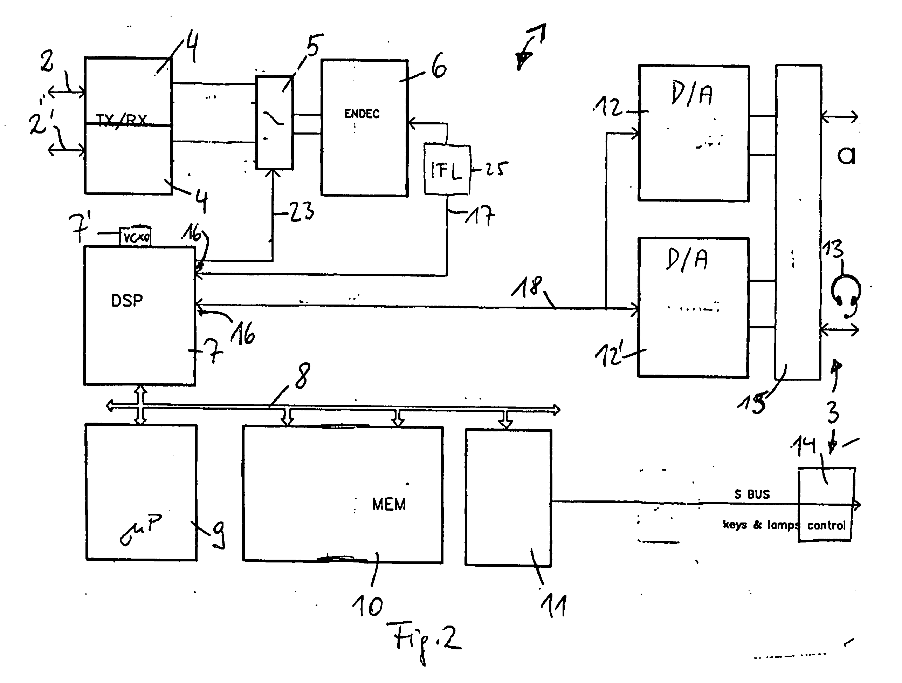

Gemäß Fig. 1 sind an einen vorteilhafterweise gedoppelten Bus 2, 2' eine Anzahl von Stationen 1 angeschlossen. Die Stationen sind dezentral organisiert und gegebenenfalls untereinander gleich aufgebaut. Der gleiche Aufbau der Stationen ist jedoch nicht von größter Bedeutung, sondern vereinfacht und verbilligt lediglich die Erstellung des Systems. Es ist durchaus möglich, Stationen verschiedenen Intelligenzgrades längs des Busses 2, 2' aufzubauen. User-Einrichtungen 3 sind an die Stationen 1 angeschlossen. Die einzelnen Stationen 1 werden bezüglich ihrer Reihenfolge festgelegt, in der sie ihre Datenpakete auf den Bus 2,2' abgeben. Die Festlegung der Reihenfolge wird vor Übertragungsbeginn arbitrarisch oder willkürlich vorgenommen werden oder entspricht der physikalischen Anordnung der Stationen längs des Busses 2,2', welch letztere Anordnung bei langen Bussystemen übertragungstechnische Vorteile bietet.

Gemäß Fig. 1 sind den einzelnen Stationen 1 Buchstaben A, B, C...G....K zugeordnet. Beispielsweise kann vorgesehen sein, daß die Stationen in der alphabetischen Reihenfolge der Buchstaben auf den Bus in die ihnen zugeordnete Zeitfenster eines Übertragungsrahmens Datenpakete senden; in gleicher Weise wäre es jedoch auch möglich, die Stationen 1 in der Reihenfolge A C B K D E F G H I J senden zu lassen.

Nach vorgegebenen Auswahlkriterien wird vor Übertragungsbeginn aus den Stationen 1 eine Master-Station ausgewählt, die auf den Bus ein Startpaket 19 zur Synchronisation der Stationen aufgibt und mit diesem Synchronisationssignal den Stationstakt vorgibt bzw. den Beginn des Sendezeitpunktes für die einzelnen Stationen 1 definiert. Diesem Startpaket 19 (Fig.3) folgt ein initial gap 22, in dem ein Datenpaket 22' der Masterstation mit Signalisierungsdaten und ein isochrones Datenpaket 22" mit Sprach- und Signalisierungsdaten gesendet wird, womit die ausgewählte Master-Station auch selbst Daten an die einzelnen Stationen 1 übertragen kann. Mit dem Startpaket beginnt ein Übertragungsrahmen 20 innerhalb welches Übertragungsrahmens 20 den einzelnen Stationen 1 jeweils Zeitbereiche 21 zugeordnet sind, in denen diese ihre Datenpakete, umfassend eine Präambel P, einen Header H und Datenbytes D auf-den Bus 2.2' aufgeben können. Gemäß Fig. 1 und 3 wird angenommen, daß K-Stationen 1 längs des Busses 2,2' angeordnet sind, sodaß der Zeitbereich 21 der Station K der letzte Zeitbereich im Übertragungsrahmen ist. Es kann jedoch durchaus sein, daß der Übertragungsrahmen 20 länger gewählt wird und in dem Zeitbereich zwischen dem Datenpaket der in der gewählten Reihenfolge letzten Station und dem Ende des Übertragungsrahmens keine oder nutzlose oder anlageninteme Daten übertragen werden.

Der initial gap 22 zwischen dem Startpaket und dem Beginn des Zeitfensters 21, das der nach der Master-Station als nächste sendenden Station zugeordnet ist, dient insbesondere auch zur anlagenintemen Kommunikation bzw. Übertragung von Signalisierungsdaten.

Die von den einzelnen Stationen 1 auf den Bus 2,2' aufgegebenen Datenpakete umfassen eine Präambel P, die vorzugsweise nicht mehr als 2 bytes umfaßt; der Header eines derartigen Datenpaketes umfaßt 2 bis 3 bytes, sodaß bei einer bevorzugten Länge der Datenpakete von insgesamt 22 bytes für die Übertragung von Daten 17 bis 18 bytes zur Verfügung stehen. Die Länge der Präambel und des Headers ist somit beträchtlich verkürzt gegenüber den in Fig. 3a dargestellten Ethemet-Datenpaketen.

Diese Ethernet-Datenpakete umfassen eine Präambel einer vorgegebenen Länge von 8 bytes und einen Header einer vorgegebenen Länge von 14 bytes. Für die nachfolgenden Daten stehen 46 bis 1500 bytes zur Verfügung, so daß der gesamte Übertragungsrahmen eine Länge von 68 bis 1522 bytes umfaßt. Das in Fig. 3a dargestellte Ethemet-Datenpaket umfaßt 8 bytes für die Präambel sowie 13 bytes für den Header sowie 1500 bytes für Daten.

In Fig. 3b ist ein Datenpaket dargestellt, wie es bei der erfindungsgemäßen Anordnung übertragen wird, das für die Präambel 2 bytes und für den Header ebenfalls 2 bytes und für die Daten 18 bytes zeigt.

In Fig. 3c ist ein spezieller Fall von erfindungsgemäßen Datenpaketen dargestellt, die von einer Station abgegeben werden. Derartige Datenfelder werden als "concatenated" bezeichnet. Einer Präambel von 2 bytes folgt eine Anzahl von Datenfeldern einer Länge von jeweils 18 bytes, denen jeweils lediglich ein Header mit 2 bytes vorangeht. Die einzelnen mit Headern versehenen Datenfelder werden von der sie absendenden Station unmittelbar hintereinander abgesendet, sodaß für alle mit den Headern versehenen Datenfeldern nur eine einzige Präambel vorgesehen werden muß. Es ist selbstverständtich, daß durch interne Signalübertragung dieser "concatenated" Datenpakete auf den Bus aufgebenden Station eine entsprechende Zeitspanne im Übertragungsrahmen zugeordnet worden ist. Vorteilhafterweise werden jeweils 8 derartige mit einem Header versehenen Datenpakete einer Präambel nachgeordnet und abgesandt. Die Gesamtlänge einer derartigen Übertragung umfaßt sodann 162 bytes.

Auf diese Weise kann einer Station mehr Sendezeitraum eingeräumt werden und gleichzeitig die für die Datenübertragung benötigten Signalisierungs- bzw. Protokolldaten verringert werden.

Fig. 2 zeigt schematisch den Aufbau einer Station 1. An das Bussystem 2, 2' sind die einzelnen Stationen 1 über jeweils einen TX/RX-Treiber 4 angeschlossen. Über einen Bus-Umschaltet 5 ist ein Manchester-Endec 6 angeschlossen, der über einen Interface-Bus 17 an einen die Datenverarbeitungseinheit der Station darstellenden digitalen Signalprozessor 7, und zwar an einen S-PORT 16, angeschlossen ist. An einen weiteren S-PORT 16 des digitalen Signalprozessors 7 sind über einen Interface Bus 18 zumindest ein D/A-Umsetzer 12, z.8. Codec, für Signaldaten und zumindest ein D/A-Umsetzer 12', z.B. Codee, für Sprachdaten angeschlossen. Als Signalisierungsdaten kommen insbesondere PTT, squelch und ähnliche Signale zur Übertragung vor.

Über einen internen Bus 8 ist der digitale Signalprozessor 7 mit einem Mikroprozessor 9 und entsprechenden flüchtigen und nicht-flüchtigen Speichern 10 verbunden. Über ein Interface 11 sind entsprechende User-Einrichtungen, wie z. B. Keybord, touch screens, Tastaturen und andere Benutzungselemente 14 angeschlossen. Die Gesamtheit der dem Bediener zugänglichen Elemente 13 und 14 bzw. der Head-sets sowie die Leitungsinterfaces und die Interfaces für Funkanlagen sind mit 3 bezeichnet und - da sie eigentlich den Kontakt der Stationen 1 mit der Außenwelt darstellen - in Fig. 1 von den Stationen getrennt dargestellt.

Über eine Leitung 23 ist der digitale Signalprozessor 7 mit dem Wahlschalter 5 verbunden und in vorgegebenen Zeitabständen erfolgt eine Umschaltung des Empfanges von einem Bus zum anderen Bus, um festzustellen, ob beide Bus-Leitungen 2, 2' intakt sind. Es erfolgt somit eine Datenübertragung immer auf beiden Bussen 2,2', sodaß die vorgenommene Umschaltung die Übertragung nicht stören kann, jedoch die Redundanz der Anlage beträchtlich erhöht

Die Übertragung von verkürzte Präambeln aufweisenden Datenpaketen wird durch den Bauteil 6 ermöglicht, der eingerichtet ist, um verkürzte Präambeln erkennen zu können; in einfacher und betriebssicherer Weise wird ein derartiger Bauteil 6 von einem Manchester-Decoder verwirklicht.

Zur Erkennung des von der Master-Station auf den Bus 2,2'aufgegebenen Startpaketes ist der Datenverarbeitungseinrichtung 7 eine Erkennungseinheit, insbesondere ein Sollwert-Speicher zugeordnet, der z.B. Platz in dem Speicher 10 findet. Die Datenverarbeitungseinheit 7 umfaßt eine Clockeinheit 7', die durch Empfang des Startpaketes 19 phasenstarr zu den Stationszeiten der jeweils anderen Stationen 1 eingeregelt wird. Diese Clockeinheit 7' wird zweckmäßig von einem VCXO gebildet, dessen Frequenz durch Einregelung seiner Betriebsspannung verändert werden kann.

Die von den Benützem über die Eingabeeinheiten 3 aufgegebenen Daten werden der stationseigenen Datenverarbeitungseinheit 7 zugeführt und von dort allenfalls nach einer Bearbeitung im Mikroprozessor 9 über den S-PORT 16 und die Leitung 17 dem Manchester-Endec bzw. Bauteil 6 aufgegeben, der die Daten in Pakete einordnet und mit entsprechenden Präambeln und Headern versieht. Der Tx/Rx-gibt die Datenpakete auf den Bus 2, 2'. Die einzelnen Stationen 1 können nur während der ihnen zugeordneten Zeitfenster 21 senden; es ist jedoch gewährleistet, daß die Stationen 1 andauernd, ausgenommen die eigene Sendezeit, zum Empfang von auf dem Bus 2,2' übertragenen Datenpaketen bereit sind.

Eine Mitteilung von Stationssendezeiten oder Absenderkennungen ist nicht erforderlich, da die Übertragung des Startsignals und die anfänglich festgelegte Reihenfolge der Stationen jeder Station genau vorgibt, zu welchem Zeitpunkt sie senden kann und jede Station damit auch erkennen kann, von welcher Station die Nachricht abgesendet wird. Wenn eine Station keine Daten sendet, so verstreicht das dieser Station zugeordnete Zeitfenster 21 ungenutzt und die in der Reihenfolge nächste Station beginnt in dem darauffolgenden Zeitfenster 21 zu senden usw.

Gemäß Fig. 3 sind zwischen den einzelnen Zeitfenstern 21, die den einzelnen Stationen 1 zugeordnet sind, sendefreie Zwischenräume 24 vorgesehen. Dieser sendefreie Zwischenraum 24 dient dazu, um allfällige Ungenauigkeiten im Takt der einzelnen Stationen 1 ausgleichen zu können bzw, um Zeitunterschiede bei der Signalfortpflanzung aufgrund unterschiedlicher Distanzen zwischen einzelnen Stationen 1 im Bus 2,2' zu kompensieren. Das Startpaket, das von der Master-Station abgegeben wird, hat zu den einzelnen Stationen 1 unterschiedliche Laufzeiten; dieselben Unterschiede in den Laufzeiten ergeben sich auch bei Absendung der Datenpakete von den einzelnen Stationen 1; es werden jedoch durch die Synchronisation mit dem Startpaket und beim Absenden von Datenpaketen diese Laufzeit-Unterschiede weitgehend ausgeglichen.

## Patentansprüche

1. Verfahren zur Übertragung von Daten, wobei die Daten in Form von Präambel-, Header- und/oder Signalbytes umfassenden Datenpaketen über einen Bus (2, 2') zwischen an den Bus (2, 2') angeschlossenen Stationen (1) übertragen werden, wobei den Stationen (1) von angeschlossenen Peripherieeinheiten (3) die zu übertragenden Daten zugeführt werden und die Stationen (1) erhaltene Daten über diese Peripherieeinheiten (3) abgeben, wobei der Stationstakt mit einem von einer Master-Station abgegebenen Synchronisationssignal synchronisiert wird, wobei die einzelnen Stationen (1) in eine bestimmte Reihenfolge gesetzt werden, und wobei den Stationen (1) Zeitfenster (21) zugeordnet werden, in welchen Zeitfenstern die einzelnen Stationen (1) jeweils ihre zu sendenden Datenpakete in den Bus (2, 2') einspeisen
**dadurch gekennzeichnet,**
- **dass** vor Beginn der Datenübertragung unter den gleichberechtigten Stationen nach vorgegebenen Kriterien eine Master-Station ausgewählt wird, die mit vorgegebener Wiederholungsfrequenz ein den Beginn eines Übertragungsrahmens definierendes Startpaket (19) auf den Bus aufgibt,
- **dass** das den Beginn des Übertragungsrahmens (20) festlegende Startpaket (19) von allen Stationen (1) als Synchronisationssignal für den jeweiligen Stationstakt herangezogen wird, und
- **dass** den Stationen (1) in dieser bestimmten Reihenfolge aufeinanderfolgende Zeitfenster in dem von der Master-Station generierten Übertragungsrahmen zugeordnet werden.

2. Verfahren nach Anspruch 1, **dadurch gekennzeichnet, dass** die dem in jeder Station (1) eigenständig generierten Stationstakt zugrundeliegende Frequenz in Abhängigkeit von der Zeitdifferenz zwischen dem erwarteten und dem tatsächlichen Eintreffen eines Startpaketes (19) angepasst wird, wozu mit jedem Eintreffen eines Startpaketes die Clockeinheit der jeweiligen Station abgestimmt wird.

3. Verfahren nach Anspruch 1 oder 2, **dadurch gekennzeichnet, dass** die Stationen (1) anhand ihrer Baunummer, anhand von ihnen zugeordneten Identifizierungsnummem, anhand von willkürlich zugeordneten unterschiedlichen Zahlen oder entsprechend ihrer physikalischen Aufeinanderfolge längs des Busses (2, 2') gereiht werden und in dieser festgelegten Reihenfolge nacheinander ihre Datenpakete während der zugeordneten Zeitfenster des Übertragungsrahmens in den Bus (2, 2') absenden.

4. Verfahren nach einem der Ansprüche 1 bis 3, **dadurch gekennzeichnet, dass** als Master-Station eine am Anfang oder an einem Ende des Busses (2, 2') gelegene Station (1) ausgewählt wird.

5. Verfahren nach einem der Ansprüche 1 bis 4, **dadurch gekennzeichnet, dass** nur eine vorgegebene Anzahl von verschiedene Länge aufweisenden Datenpaketen von den Stationen (1) abgesendet werden.

6. Verfahren nach einem der Ansprüche 1 bis 5, **dadurch gekennzeichnet, dass** die Länge und/oder Lage des den einzelnen Stationen (1) im Übertragungsrahmen (20) zugeordneten Zeitfensters (21) durch Übermittlung von Bedarfsnachrichten zwischen den Stationen (1) verändert wird.

7. Verfahren nach einem der Ansprüche 1 bis 6, **dadurch gekennzeichnet, dass** die, vorzugsweise 22 bytes umfassenden, Datenpakete mit gegenüber Ethemet-Präambeln verkürzten, vorzugsweise 2 bytes umfassenden, Präambeln und gegenüber Ethemet-Headern verkürzten, vorzugsweise 2 bis 3 bytes umfassenden, Headern gebildet werden.

8. Verfahren nach einem der Ansprüche 1 bis 7, **dadurch gekennzeichnet, dass** die Datenpakete mit einer Präambel gebildet werden, deren byte-Anzahl maximal 10 % der gesamten Länge des Datenpaketes beträgt.

9. Verfahren nach einem der Ansprüche 1 bis 8, **dadurch gekennzeichnet, dass** die Datenpakete mit einem Header gebildet werden, dessen byte-Anzahl maximal 15 % von der gesamten Länge des Datenpaketes beträgt.

10. Verfahren nach einem der Ansprüche 1 bis 9, **dadurch gekennzeichnet, dass** in jeder Station nach Ablauf einer die Zeitdauer eines Übertragungsrahmens (20) übersteigenden Zeitspanne, insbesondere eines einem ganzzahligen Vielfachen eines Übertragungsrahmens (20) entsprechenden Zeitabschnittes, und Ausbleiben eines Startpaketes (19) in dieser Zeitspanne eine Signalübertragung zu oder ein Informationsaustausch mit den anderen Stationen (1) zur Auswahl einer neuen Master-Station eingeleitet wird und/oder in der jeweiligen Station (1) oder in jeder Station (1), in der ein Ausbleiben eines Startpaketes (19) festgestellt wird, ein Startpaket erstellt und auf den Bus (2, 2') aufgegeben wird und dass die Station (1), die als erste ein neues Startpaket (19) an alle Stationen abgesendet hat, als neue Master-Station erkannt wird.

11. Verfahren nach einem der Ansprüche 1 bis 10, **dadurch gekennzeichnet, dass** mit der Übertragung des Startpaketes (19) die Stationszeiten in den einzelnen Stationen (1) zueinander phasenstarr eingeregelt werden.

12. Verfahren nach einem der Ansprüche 1 bis 11, **dadurch gekennzeichnet, dass** bei einer Anzahl von Datenkanälen von 5 bis 1000, insbesondere 5 bis 300, und einer Übertragungskapazität von 4 kbit/s bis 8,5 Mbit/s, vorzugsweise 60 kbit/s bis 130 kbit/s, eine Rahmenfrequenz von 100 bis 1000 Hz, insbesondere 500 Hz, und eine Länge eines Pakets von 12 bis 84 bytes, insbesondere von 15 bis 30 bytes, gewählt wird und/oder dass ein Bus (2, 2'), vorzugsweise ein Koaxialkabel, mit einer Bandbreite von 1 bis 155 Mbit/s, vorzugsweise 1 bis 50 Mbit/s, eingesetzt wird.

13. Verfahren nach einem der Ansprüche 1 bis 12, **dadurch gekennzeichnet, dass** im Übertragungsrahmen (20) zwischen dem Startpaket und dem der ersten nach der Master-Station sendenden Station (1) zugeordneten Zeitfenster (21) ein initial gap (22) für eine Übertragung von Anlagendaten zwischen den Stationen (1) zur Auswahl der Master-Station, zur Zuordnung oder Abänderung von Zeitfenstern (21) und/oder zur Übertragung von Anlagenparametem ausgebildet wird, welchem initial gap (22) das Zeitfenster (21) für das Absenden von Daten der Master-Station folgt.

14. Verfahren nach einem der Ansprüche 1 bis 13, **dadurch gekennzeichnet, daß** Datenpakete gebildet werden, bei denen einer einzigen, gegenüber Ethemet-Präambeln verkürzten, vorzugsweise 2 bytes, umfassenden Präambel eine Anzahl, vorzugsweise maximal 8, von unmittelbar aufeinanderfolgenden, präambelfreien und jeweils lediglich einen gegenüber Ethemet-Headern verkürzten, vorzugsweise 2 bis 3 bytes umfassenden, Header aufweisenden, vorzugsweise eine Gesamtlänge von 17 bis 18 bytes aufweisenden, Datenpaketen nachgereiht ist.

15. Verfahren nach einem der Ansprüche 1 bis 14, **dadurch gekennzeichnet, dass** in jeder Station die Daten zwischen einer stationseigenen Datenverarbeitungseinheit (7) und dem Bus (2, 2') über einen gegenüber Ethemet-Präambeln verkürzte Präambeln erkennenden Bauteil (6) geführt werden.

16. Verfahren nach Anspruch 15, **dadurch gekennzeichnet, dass** der Bauteil (6) manchester-codierte Präambeln erkennt und von einem Manchester-Decoder gebildet wird.

17. Verfahren nach Anspruch 15 oder 16, **dadurch gekennzeichnet, dass** die von einem digitalen Signalprozessor oder einem Mikrocontroller gebildete Datenverarbeitungseinheit (7) einen S-PORT (16) aufweist und ihr die Daten von dem die verkürzten Präambeln erkennenden Bauteil (6).über ihren S-PORT (16) zugeführt und/oder entnommen werden.

18. Anlage zur Übertragung von Daten umfassend einen, gegebenenfalls gedoppelten, Bus (2, 2') und an den Bus (2, 2') angeschlossene, dezentral aufgebaute Stationen (1), an die Peripherieeinheiten (3) angeschlossen sind, wobei der Takt der einzelnen Stationen (1) mit einem von einer Master-Station abgegebenen Synchronisationssignal synchronisiert ist, wobei die einzelnen Stationen (1) in eine bestimmte Reihenfolge gesetzt sind, und wobei den Stationen (1) Zeitfenster (21) zugeordnet sind, in welchen Zeitfenstern die einzelnen Stationen (1) jeweils ihre zu sendenden Datenpakete in den Bus (2, 2') einspeisen, insbesondere zur Durchführung des Verfahrens nach einem der Ansprüche 1 bis 17, **dadurch gekennzeichnet, dass** die Anlage derart ausgestaltet ist,
- **dass** eine vor Beginn der Datenübertragung unter den gleichberechtigten Stationen nach vorgegebenen Kriterien ausgewählte Master-Station mit vorgegebener Wiederholungsfrequenz ein den Beginn eines Übertragungsrahmens definierendes Startpaket (19) auf den Bus aufgibt,
- **dass** allen Stationen (1) das den Beginn des Übertragungsrahmens (20) festlegende Startpaket (19) als Synchronisationssignal für den jeweiligen Stationstakt zugeführt wird,
- **dass** den Stationen (1) in der bestimmten Reihenfolge aufeinanderfolgende Zeitfenster in dem von der Master-Station generierten Übertragungsrahmen zugeordnet werden,
- und wobei in jeder Station zwischen eine stationseigene Datenverarbeitungseinheit (7) und den Bus (2. 2') ein gegenüber Ethernet-Präambeln verkürzte Präambeln erkennender Bauteil (6) geschaltet ist und
- die Datenverarbeitungseinheit (7) jeder Station (1) eine Erkennungseinheit, insbesondere Vergleichseinheit, mit einem Sollwertspeicher (10), für das den Beginn eines Übertragungsrahmens festlegende Startpaket (19) aufweist, an die eine stationseigene, mit dem Startpaket synchronisierbare Clockeinheit (7') angeschlossen ist.

19. Anlage nach Anspruch 18, **dadurch gekennzeichnet, dass** die Datenverarbeitungseinheit (7) ein S-PORT (16) aufweist und der die verkürzten Präambeln erkennende Bauteil (6) an den S-PORT (16) der Datenverarbeitungseinheit (7) angeschlossen ist und/oder dass zwischen die Datenverarbeitungseinheit (7) und den Bauteil (6) eine interface logic (25) geschaltet ist.

20. Anlage nach Anspruch 18 oder 19, **dadurch gekennzeichnet, dass** der Bauteil (6) von einem Manchester-Decoder gebildet ist und derart ausgestaltet ist, dass der Bauteil (6) manchester-codierte Präambeln erkennt.

## Claims

1. Method for transmitting data, wherein the data are transmitted via a bus (2, 2') in the form of data packages including preamble bytes, header bytes and/or signal bytes between stations (1) coupled to the bus (2, 2'), wherein the data to be transmitted are fed from coupled peripheral units (3) to the stations (1) and the stations (1) emit any data received by way of these peripheral units (3), the station cycle being synchronised by a synchronisation signal fed by a master station, and the individual stations (1) are put into a certain order, wherein time windows (21) are assigned to the stations (1), in which time windows the individual stations (1) respectively feed their data packages to be transmitted into the bus (2, 2')
**characterised in**
- **that** before the beginning of the data transmission, according to predetermined criteria a master station is selected among the stations of equal rights, which transmits with a predetermined repetition frequency a starting package (19), which defines the beginning of a transmission frame, to the bus,
- **that** the starting package (19), which fixes the beginning of the transmission frame (20), is used by all stations (1) as the synchronisation signal for the respective station cycle, and
- **that** time windows succeeding in this certain order, are assigned to the stations (1) in the transmission frame generated by the master station.

2. Method according to claim 1, **characterised in that** the frequency, on which the station cycle autonomously generated in each station (1) is based, is adapted as a function of the time difference between the expected arrival and the actual arrival of a starting package (19), to which end the clock unit of the respective station is tuned with each arrival of a starting package.

3. Method according to claim 1 or 2, **characterised in that** the stations (1) are put in order according to their work's number, according to identification numbers assigned to them, according to different numbers arbitrarily assigned to them or in correspondence with their physical succession along the bus (2, 2'), and that they transmit in this fixed order successively their data packages during the assigned time windows of the transmission frame into the bus (2, 2').

4. Method according to any of claims 1 to 3, **characterised in that** a station (1) is elected as the master station, which is situated either at the beginning or at the end of the bus (2, 2').

5. Method according to any of claims 1 to 4, **characterised in that** only a predetermined number of data packages of different length are transmitted by the stations (1).

6. Method according to any of claims 1 to 5, **characterised in that** the length and/or the position of the time window (21), assigned to the individual stations (1) in the transmission frame (20), is changed by the transmission of messages of need between the stations (1).

7. Method according to any of claims 1 to 6, **characterised in that** the data packages, which comprise preferably 22 bytes, are formed with preambles, which are shortened in comparison with Ethernet preambles and preferably comprise 2 bytes, and headers, which are shortened in comparison with Ethernet headers and preferably comprise 2 to 3 bytes.

8. Method according to any of claims 1 to 7, **characterised in that** the data packages are formed with a preamble whose number of bytes amounts to 10% in maximum of the total length of the data package.

9. Method according to any of claims 1 to 8, **characterised in that** the data packages are formed with a header whose number of bytes amounts to 15% in maximum of the total length of the data package.

10. Method according to any of claims 1 to 9, **characterised in that** in each station, after a time period has expired which exceeds the duration of a transmission frame (20), particularly after a time period, which corresponds to an multiple integer of a transmission frame (20), and the absence of a starting package (19) within this time period, a signal transmission to the other stations (1) or an information exchange with the other stations is initiated for selecting a new master station and/or a starting package is established and emitted to the bus (2, 2') in the respective station (1) or in each station (1), wherein the absence of a starting package is determined, and that that station (1), which has transmitted first a new starting package (19) to all stations is recognised as the new master station.

11. Method according to any of claims 1 to 10, **characterised in that** with the transmission of the starting package (19), the station times in the individual stations (1) are mutually adjusted in a phase-locked manner.

12. Method according to any of claims 1 to 11, **characterised in that** with a number of data channels of 5 to 1000, particularly 5 to 300, and a transmission capacity of 4 kbit/s to 8.5 Mbit/s, preferably 60 kbit/s to 130 kbit/s, one chooses a frame frequency of 100 to 1000 Hz, particularly of 500 Hz, and a length of a package of 12 to 84 bytes, particularly of 15 to 30 bytes, and/or that a bus (2, 2'), preferably a coaxial cable, is used having a band width of 1 to 155 Mbit/s, preferably 1 to 50 Mbit/s.

13. Method according to any of claims 1 to 12, **characterised in that** within the transmission frame (20) between the starting package and the time window (21) assigned to that station (1), which transmits first after the master station, an initial gap (22) is formed for the transmission of apparatus data between the stations (1) for the selection of the master station, for assigning or modifying time windows (21) and/or for transmitting apparatus parameters, to which initial gap (22) the time window (21) follows for transmitting data of the master station.

14. Method according to any of claims 1 to 13, **characterised in that** data packages are formed, wherein a number of data packages, preferably 8 in maximum, with preference having a total length of 17 to 18 bytes, which succeed immediately and are preamble-free and comprise only a header, that is shortened in comparison with Ethernet headers and includes preferably 2 to 3 bytes, is postponed to a single preamble, which is shorted in comparison with Ethernet preambles, and comprises preferably 2 bytes.

15. Method according to any of claims 1 to 14, **characterised in that** the data are directed in each station through a component (6), which recognises preambles that are shortened in comparison with Ethernet preambles, between a station proper data processing unit (7) and the bus (2, 2').

16. Method according to claim 15, **characterised in that** the component (6) recognises Manchester coded preambles and is formed by a Manchester decoder.

17. Method according to claim 15 or 16, **characterised in that** the data processing unit (7), formed by a digital signal processor or a microcontroller, comprises an S-PORT (16), the data from the component (6), which recognises shortened preambles, being supplied and/or extracted via its S-PORT (16).

18. Apparatus for transmitting data, comprising an, optionally doubled, bus (2, 2') and stations (1) coupled to the bus (2, 2') and being constructed in a decentralised way, and to which peripheral units (3) are connected, wherein the cycle of the individual stations (1) is synchronised by a synchronisation signal emitted by a master station, and the individual stations (1) are put in a certain order, time windows (21) being assigned to the stations (1), in which time windows the individual stations (1) feed respectively their data packages to be transmitted into the bus (2, 2'), particularly for carrying out the method according to any of claims 1 to 17, **characterised in that** the apparatus is constructed in such a manner
- **that** a master station, selected according to predetermined criteria among the stations of equal rights before the beginning of the data transmission, feeds to the bus with a predetermined repetition frequency a starting package (19) which defines the beginning of a transmission frame,
- **that** the starting package (19), that fixes the beginning of the transmission frame (20), is supplied to all stations (1) as a synchronisation signal for the respective station cycle,
- **that** time windows, which succeed in the certain order, are assigned to the stations (1) in the transmission frame generated by the master station,
- and wherein a component (6), that recognises preambles shortened in comparison with Ethernet preambles, is in circuit between a station proper data processing unit (7) and the bus (2, 2'), and
- the data processing unit (7) of each station (1) comprises a recognising unit, particularly a comparison unit, having a nominal value memory (10) for the starting package (19), which fixes the beginning of a transmission frame, to which a station proper clock unit (7') is coupled, which may be synchronised with the starting package.

19. Apparatus according to claim 18, **characterised in that** the data processing unit (7) comprises an S-PORT (16), the component (6), which recognises the shortened preambles, being connected to the S-PORT (16) of the data processing unit (7) and/or that an interface logic (25) is put into circuit between the data processing unit (7) and the component (6).

20. Apparatus according to claim 18 or 19, **characterised in that** the component (6) is formed by a Manchester decoder and is constructed in such a manner that the component (6) recognises Manchester coded preambles.

## Revendications

1. Procédé pour la transmission de données, lesdites données étant transmis par un bus (2, 2') entre des stations (1) reliées au bus (2, 2') en forme des paquets de données comprenant des bytes de préambule, d'un header et/ou des signaux, dans lequel les données à transmettre sont fournies aux stations (1) par des unités de périphérie (3) raccordées, et les stations (1) émettent des données reçues à travers de ces unités de périphérie (3), dans lequel le cycle de station est synchronisé par un signal de synchronisation émis par la station maître, et les stations (1) individuelles sont mis en un certain ordre en attribuant des fenêtres de temps (21) aux stations (1), les stations (1) individuelles fournissant ses paquets de données respectifs à transmettre au bus (2, 2') pendant lesdites fenêtres de temps,
**caractérisé en ce,**
- **qu'**avant le commencement de la transmission de données parmi les stations égaux en droits selon des critères prédéterminés, on choisit une station maître, qui fournit au bus, avec une fréquence de répétition prédéterminée, un paquet de start (19) définissant le commencement d'un cadre de transmission,
- **que** le paquet de start (19), qui fixe le commencement du cadre de transmission (20), est utilisé par tous les stations (1) comme un signal de synchronisation pour le cycle de start respectif, et
- **que** l'on attribue aux stations (1), dans le cadre de transmission généré par la station maître, des fenêtres de temps, qui succèdent en ce certain ordre.

2. Procédé selon la revendication 1, **caractérisé en ce, que** la fréquence, à laquelle le cycle de station généré indépendamment dans chaque station (1) est basé, est adapté en fonction de la différence de temps entre l'arrivée attendue et effective d'un paquet de start (19), à quel fin l'unité de rythme de la station respective est accordée lors de chaque arrivée d'un paquet de start.

3. Procédé selon la revendication 1 ou 2, **caractérisé en ce, que** les stations (1) sont mis en ordre selon son numéro de construction, selon de numéros d'identification attribués à eux, selon des nombres différents attribués à volonté ou en correspondance avec sa succession physique le long du bus, et qu'elles envoient dans cette ordre fixé successivement leurs paquets de données au bus (2, 2') pendant les fenêtres de temps du cadre de transmission attribuées à eux.

4. Procédé selon une quelconque des revendications 1 à 3, **caractérisé en ce, que** l'on choisit comme station maître une station (1) située au commencement ou à un bout du bus (2, 2').

5. Procédé selon une quelconque des revendications 1 à 4, **caractérisé en ce, que** les stations (1) envoient seulement un nombre prédéterminé des paquets de données ayant une longueur différente.

6. Procédé selon une quelconque des revendications 1 à 5, **caractérisé en ce, que** la longueur et/ou la position de la fenêtre de temps (21) attribuée aux stations (1) individuelles dans le cadre de transmission (20) est changée par une transmission des messages de besoin entre les stations (1).

7. Procédé selon une quelconque des revendications 1 à 6, **caractérisé en ce, que** l'on forme les paquets de données, qui comprennent de préférence 22 bytes, avec des préambules raccourcies relativement aux préambules Ethernet, et préférablement comprenant 2 bytes, et avec des headers raccourcies relativement aux headers Ethernet, et préférablement comprenant 2 à 3 bytes.

8. Procédé selon une quelconque des revendications 1 à 7, **caractérisé en ce, que** les paquets de données sont formés avec une préambule, dont le nombre de byte se monte à 10 % en maximum de la longueur totale du paquet de données.

9. Procédé selon une quelconque des revendications 1 à 8, **caractérisé en ce, que** les paquets de données sont formés avec un header, dont le nombre de byte se monte à 15 % en maximum de la longueur totale du paquet de données.

10. Procédé selon une quelconque des revendications 1 à 9, **caractérisé en ce, que** dans chaque station, après l'expiration d'une période de temps, qui dépasse la durée d'un cadre de transmission (20), en particulier d'une période correspondant à un multiple entier d'un cadre de transmission (20), et après l'absence d'un paquet de start (19) dans cette période, on prépare une transmission de signal aux autres stations (1) ou un échange d'information avec ceux-ci pour choisir une nouvelle station maître et/ou que l'on établit un paquet de start à la station (1) respective ou à chaque station (1), dans laquelle on constate l'absence d'un paquet de start (19), et on le fournit au bus (2, 2'), et que cette station (1), qui a transmis la première un nouveau paquet de start (19) à tous les stations, est reconnue comme nouvelle station maître.

11. Procédé selon une quelconque des revendications 1 à 10, **caractérisé en ce, qu'**avec la transmission du paquet de start (19), les temps de station dans les stations (1) individuelles sont ajustés d'une forme rigide en phase les unes par rapport aux autres.

12. Procédé selon une quelconque des revendications 1 à 11, **caractérisé en ce, qu'**avec un nombre des canaux de données de 5 à 1000, particulièrement de 5 à 300, et avec une capacité de transmission de 4 kbit/s à 8,5 Mbit/s, préférablement de 60 kbit/s à 130 kbit/s, on choisit une fréquence de cadre de 100 à 1000 Hz, particulièrement de 500 Hz, et une longueur d'un paquet de 12 à 84 bytes, particulièrement de 15 à 30 bytes, et/ou qu'un bus (2, 2'), de préférence un câble coaxial, d'une largeur de bande de 1 à 155 Mbit/s, préférablement de 1 à 50 Mbit/s, est utilisé.

13. Procédé selon une quelconque des revendications 1 à 12, **caractérisé en ce, que**, dans le cadre de transmission (20) entre le paquet de start et la fenêtre de temps (21) attribuée à la première station (1), qui transmet après la station maître, on forme un gap initial (22), pour la transmission des données de dispositif entre les stations (1) pour choisir la station maître, pour l'attribution ou modification des fenêtres de temps (21) et/ou pour la transmission des paramètres de dispositif, dans la cadre de transmission (20) entre le paquet de start et le premier fenêtre de temps (21) attribuée à la première station (1) transmettant après la station maître.

14. Procédé selon une quelconque des revendications 1 à 13, **caractérisé en ce, que** l'on forme des paquets de données, préférablement d'une longueur totale de 17 à 18 bytes, où un nombre de paquets de données, préférablement 8 en maximum, qui succèdent immédiatement et sont exempte des préambules, mais présentent seulement un header raccourci relativement aux headers Ethernet et présentant de préférence 2 à 3 bytes, est mis en ordre après une seule préambule, qui est raccourcie relativement aux préambules Ethernet, et qui comprennent de préférence 2 bytes.

15. Procédé selon une quelconque des revendications 1 à 14, **caractérisé en ce, que** les données à chaque station entre une unité de traitement de données (7) appartenant à la station et le bus (2, 2') sont dirigées à travers d'un composant (6), qui reconnaît les préambules raccourcies relativement aux préambules Ethernet.

16. Procédé selon la revendication 15, **caractérisé en ce, que** le composant (6) reconnaît des préambules en Manchester code, étant formé par un décodeur Manchester.

17. Procédé selon la revendication 15 ou 16, **caractérisé en ce, que** l'unité de traitement de données (7), formée par un processeur numérique de signaux ou par un micro-contrôleur, présente un S-PORT (16), et que ses données sont fournis et/ou pris par le composant (6), qui reconnaît les préambules raccourcies, à travers son S-PORT (16).

18. Dispositif pour la transmission de données, comprenant un bus (2, 2'), le cas échéant doublé, et des stations (1) reliées au bus (2, 2') et étant construites d'une forme décentralisée, auxquelles des unités de périphérie (3) sont raccordées, dans lequel le cycle des stations (1) individuelles est synchronisé avec un signal de synchronisation émis par une station maître, et dans lequel les stations (1) individuelles sont mis en un certain ordre, des fenêtres de temps (21) étant attribues aux stations (1), dans lesquelles les stations (1) individuelles fournissent respectivement leurs paquets de données à transmettre au bus (2, 2'), particulièrement pour la mis en oeuvre du procédé selon une quelconque des revendications 1 à 17, **caractérisé en ce, que** le dispositif est construit de sorte,
- **qu'**une station maître sélectionnée selon des critères prédéterminés avant le commencement de la transmission des données parmi les stations égaux en droits fournit au bus un paquet de start (19), qui définit le commencement d'un cadre de transmission, d'une fréquence de répétition prédéterminée,
- **que** le paquet de start (19), qui fixe le commencement du cadre de transmission (20), est fournit à tous les stations (1) comme signal de synchronisation pour le cycle de station respectif,
- **que** l'on attribue aux stations (1) des fenêtres de temps, qui succèdent en ce certain ordre dans le cadre de transmission généré par la station maître,
- et dans lequel un composant (6), qui reconnaît des préambules raccourcies relativement aux préambules Ethernet, est mis en circuit dans chaque station entre une unité de traitement de données (7) appartenant à une station et le bus (2, 2'), et
- l'unité de traitement de données (7) de chaque station (1) présente une unité de reconnaissance, particulièrement une unité de comparaison, ayant un mémoire de valeur nominale (10) pour le paquet de start (19), qui fixe le commencement d'un cadre de transmission, et à laquelle une unité de rythme (7') appartenant à la station et capable d'être synchronisée avec le paquet de start est raccordée.

19. Dispositif selon la revendication 18, **caractérisé en ce, que** l'unité de traitement de données (7) présente un S-PORT (16), et le composant (6) reconnaissant les préambules raccourcies étant raccordé au S-PORT (16) de l'unité de traitement de données (7) et/ou, qu'un interface logic (25) est mis en circuit entre l'unité de traitement de données (7) et le composant (6).

20. Dispositif selon la revendication 18 ou 19, **caractérisé en ce, que** le composant (6) est formé d'un décodeur Manchester, et qu'il est construit d'une manière, que le composant (6) reconnaît des préambules codées en Manchester.
